(19) Europäisches Patentamt
European Patent Office
Office européen des brevets

(11) **EP 1 277 078 B1**

(12) **EUROPÄISCHE PATENTSCHRIFT**

(45) Veröffentlichungstag und Bekanntmachung des Hinweises auf die Patenterteilung:
**26.12.2007 Patentblatt 2007/52**

(21) Anmeldenummer: **01940198.3**

(22) Anmeldetag: **27.04.2001**

(51) Int Cl.:
**G02C 7/02** (2006.01)

(86) Internationale Anmeldenummer:
**PCT/DE2001/001593**

(87) Internationale Veröffentlichungsnummer:
**WO 2001/081986 (01.11.2001 Gazette 2001/44)**

(54) **PROGRESSIVES BRILLENGLAS MIT GERINGER DYNAMISCHER ÄNDERUNG DER GEBRAUCHSEIGENSCHAFTEN BEI HORIZONTALEN BLICKBEWEGUNGEN**

PROGRESSIVE SPECTACLE LENS EXHIBITING A SLIGHT DYNAMIC CHANGE OF THE PROPERTIES OF USE DURING A HORIZONTAL VIEWING MOVEMENTS

VERRE DE LUNETTE PROGRESSIF A FAIBLE VARIATION DYNAMIQUE DES PROPRIETES D'UTILISATION LORS DE MOUVEMENTS HORIZONTAUX DES YEUX

(84) Benannte Vertragsstaaten:
**AT BE CH CY DE DK ES FI FR GB GR IE IT LI LU MC NL PT SE TR**

(30) Priorität: **27.04.2000 DE 10020718**

(43) Veröffentlichungstag der Anmeldung:
**22.01.2003 Patentblatt 2003/04**

(73) Patentinhaber: **Rodenstock GmbH**
**80469 München (DE)**

(72) Erfinder:
• **WELK, Andrea**
**81547 München (DE)**
• **BAUMBACH, Peter**
**81543 München (DE)**
• **HAIMERL, Walter**
**80337 München (DE)**
• **PFEIFFER, Herbert**
**81247 München (DE)**
• **ESSER, Gregor**
**81735 München (DE)**
• **ALTHEIMER, Helmut**
**87650 Lauchdorf (DE)**
• **DORSCH, Rainer**
**81477 München (DE)**
• **ZIMMERMANN, Martin**
**85253 Kleinberghofen (DE)**

(74) Vertreter: **Müller-Boré & Partner**
**Patentanwälte**
**Grafinger Strasse 2**
**81671 München (DE)**

(56) Entgegenhaltungen:
**US-A- 5 444 503** **US-A- 5 949 519**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 277 078 B1

## Beschreibung

### Technisches Gebiet

Die Erfindung bezieht sich auf ein Verfahren zum Herstellen eines progressiven Brillenglases mit geringer dynamischer Änderung der Gebrauchseigenschaften bei horizontalen Blickbewegungen gemäß dem Patentanspruch 1.

Unter progressiven Brillengläsern (auch als Gleitsichtgläser, Multifokalgläser etc. bezeichnet) versteht man üblicherweise Brillengläser, die in dem Bereich, durch den der Brillenträger einen in größerer Entfernung befindlichen Gegenstand betrachtet - i.f. als Fernteil bezeichnet -, eine andere (geringere) Brechkraft haben als in dem Bereich (Nahteil), durch den der Brillenträger einen nahen Gegenstand betrachtet. Zwischen dem Fernteil und dem Nahteil ist die sog. Progressionszone angeordnet, in der die Wirkung des Brillenglases von der des Fernteils kontinuierlich auf die des Nahteils ansteigt. Den Wert des Wirkungsanstiegs bezeichnet man auch als Addition.

In der Regel ist der Fernteil im oberen Teil des Brillenglases angeordnet und für das Blicken "ins Unendliche" ausgelegt, während der Nahteil im unteren Bereich angeordnet ist, und insbesondere zum Lesen ausgelegt ist. Für Spezialanwendungen - genannt werden sollen hier exemplarisch Pilotenbrillen oder Brillen für Bildschirmarbeitsplätze - können der Fern- und der Nahteil auch anders angeordnet sein und/oder für andere Entfernungen ausgelegt sein. Ferner ist es möglich, daß mehrere Nahteile und/ oder mehrere Fernteile und entsprechende Progressionszonen vorhanden sind.

Bei progressiven Brillengläsern mit konstantem Brechungsindex ist es für die Zunahme der Brechkraft zwischen dem Fernteil und dem Nahteil erforderlich, daß sich die Krümmung einer oder beider Flächen vom Fernteil zum Nahteil kontinuierlich ändert.

Die Flächen von Brillengläsern werden üblicherweise durch die sogenannten Hauptkrümmungsradien R1 und R2 in jedem Punkt der Fläche charakterisiert. (Manchmal werden anstelle der Hauptkrümmungsradien auch die sogenannten Hauptkrümmungen K1 = 1/R1 und K2 = 1/R2 angegeben.) Die Hauptkrümmungsradien bestimmen zusammen mit dem Brechungsindex n des Glasmaterials die für die augenoptische Charakterisierung einer Fläche häufig verwendeten Größen:

$$\text{Flächenbrechwert D} = 0{,}5 * (n-1) * (1/R1 + 1/R2)$$

$$\text{Flächenastigmatismus A} = (n-1) * (1/R1 - 1/R2)$$

Der Flächenbrechwert D ist die Größe, über die die Zunahme der Wirkung vom Fernteil zum Nahteil erreicht wird. Der Flächenastigmatismus A (anschaulich Zylinderwirkung) ist eine "störende Eigenschaft", da ein Astigmatismus - sofern das Auge nicht selbst einen zu korrigierenden Astigmatismus aufweist -, der einen Wert von ca. 0,5 dpt übersteigt, zu einem als unscharf wahrgenommenen Bild auf der Netzhaut führt.

### Stand der Technik

Die zur Erzielung der Flächenbrechwert-Zuwachses erforderliche Änderung der Krümmung der Fläche ohne "störenden" Flächenastigmatismus ist zwar relativ einfach längs einer (ebenen oder gewundenen) Linie zu erreichen, seitlich dieser Linie ergeben sich jedoch starke "Verschneidungen" der Fläche, die zu einem großen Flächenastigmatismus führen, der das Glas in den Bereichen seitlich der genannten Linie mehr oder weniger schlecht macht.

Eine weitere Folge dieser Verschneidungen ist, daß das Brillenglas an korrespondierenden Durchblickstellen nasal und temporal unterschiedliche Eigenschaften hat. Hierdurch kann insbesondere das binokulare Sehen beeinträchtigt werden. Dies ist vor allem bei Blickbewegungen auffällig und damit störend:

Verfolgt ein Brillenträger bei ruhig gehaltenem Kopf ein bewegtes Objekt, so hängt sein Seheindruck zum einen ab von der Abbildungsqualität der beiden Einzellinsen seiner Brille an den Stellen, an denen er bei der zur Objektverfolgung notwendigen Augenbewegung durchblickt. Findet der Brillenträger an diesen Durchblicksstellen niedrige Abbildungsfehler (Astigmatismus, Refraktionsfehler, etc.) vor, so sieht er das Objekt schärfer als bei hohen Abbildungsfehlern.

Zum anderen sind aber beim Sehen in der Regel beide Augen beteiligt, und der Gesamtseheindruck wird sich zusammensetzen aus den Seheindrücken beider Augen.

So spielt es zum Beispiel eine Rolle, ob das Objekt überhaupt binokular einfach gesehen werden kann, wie groß die fusionale Belastung ist und ob der Brillenträger das Objekt mit beiden Augen gleich scharf wahrnimmt, oder etwa mit dem einen Auge gut und mit dem anderen Auge schlecht.

Schließlich ist bei bewegten Objekten die Änderung dieses binokularen Seheindrucks während der Verfolgung wichtig.

## Darstellung der Erfindung

Der Erfindung liegt die Aufgabe zugrunde, ein progressives Brillenglas derart weiterzubilden, daß sich die für die Qualität der Abbildung relevanten optischen Größen bei Blickbewegungen möglichst wenig ändern.

Eine erfindungsgemäße Lösung dieser Aufgabe ist im Patentanspruch 1 angegeben. Weiterbildungen der Erfindung sind Gegenstand der abhängigen Ansprüche.

In der Regel werden Brillengläser beurteilt und beworben durch 2-dimensionale Isoliniendarstellungen (Plots) von gewissen Eigenschaften der Flächen oder der Gebrauchssituation. Die interessierenden Werte der Gebrauchsstellung werden z.B. gewonnen, indem man zuerst den Hauptstrahl durch den Punkt auf dem Brillenglas und den Augendrehpunkt bestimmt und anschließend eine Wellenfront entlang des Hauptstrahls berechnet, deren Eigenschaften letztendlich geplottet werden.

Damit besitzt man für jeden Blickwinkel die zur lokalen Wellenfront gehörigen Eigenschaften.

Das Verhalten eines Brillenglases bei z.B. horizontalen Blickbewegungen einfach diesen Plots zu entnehmen, ist nicht möglich, da man die durch die Bewegung entstehende Folge von Durchstoßpunkten der Hauptstrahlen auf dem Brillenglas nicht kennt.

Zwar liegt es nahe, einfach die Werte eines Horizontalschnitts im Plot abzulesen, aber das ist falsch, wenn sich das Vertikalprisma in diesem Schnitt ändert; und das ist fast immer der Fall.

Eine typische Situation ist, daß einem Brillenträger bei ruhendem Kopf ein zu fixierender Objektpunkt präsentiert wird, der horizontal bewegt wird. Solche horizontalen Blickbewegungen kommen häufig vor, z.B. beim Lesen oder beim Arbeiten an einem Computer. Während dieser Augenbewegung wird sich der Seheindruck des Brillenträgers vom betrachteten Objektpunkt ändern, weil der Blick durch Glasbereiche mit unterschiedlicher Abbildungsgüte wandert. Insbesondere ändern sich die Gebrauchswerte Brechwert und Astigmatismus.

## Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1     den Verlauf des Astigmatismus in Abhängigkeit der x-Koordinate, und

Fig. 2     den Verlauf des mittleren Brechwertes in Abhängigkeit der x-Koordinate.

## Darstellung eines Ausführungsbeispiels

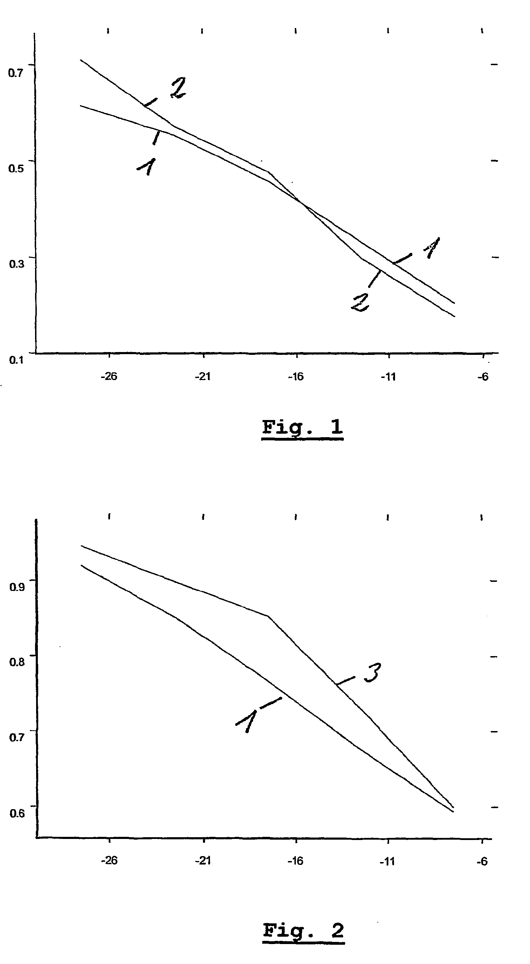

Die Fig. 1 und 2 zeigen zum Vergleich der Abbildungseigenschaften bei horizontaler Blickbewegung die Änderung von Astigmatismus und Brechwert bei verschiedenen auf dem Markt befindlichen rechten Gläsern mit der Verordnung

| | |
|---|---|
| Sphärische Wirkung | sph +0.5 dpt, |
| astigamtische Wirkung | zyl 0 dpt, |
| Addition | Add 2.0 dpt, |
| Prisma | Pr 0 cm/m |

im Vergleich mit einem erfindungsgemäßen Brillenglas.

Mit 1 ist das erfindungsgemäße Brillenglas bezeichnet, 2 bezeichnet ein Brillenglas "CZ GRADAL Top" und 3 das Brillenglas "Essilor Varilux Comfort".

Beispielhaft wurde der Fall herausgegriffen, daß der zentrale Hauptstrahl durch den Punkt mit den Koordinaten P(x= -15 mm, y= 15 mm, z= -40 mm) geht. Das verwendete Koordinatensystem hat seinen Ursprung im objektseitigen Scheitel des Brillenglases, und die z-Achse weist in Lichtrichtung.

Der Objektpunkt wird insgesamt um 20 mm horizontal bewegt, also von der Koordinate x = -27.5 mm bis x = -7.5 mm. Auf dem Brillenglas entspricht dies x-Koordinaten von etwa -12 mm bis -3 mm in einer Höhe von ungefähr y = 7 mm.

Deutlich zeigt sich die geringere Änderung der Abbildungseigenschaften beim Gegenstand dieser Erfindung, während der Blick das horizontal bewegte Objekt verfolgt.

Bei dem erfindungsgemäßen Brillenglas ändern sich Abbildungseigenschaften wie Brechwert und Astigmatismus bei der Blickbewegung deutlich weniger. Diese Tatsache findet Ausdruck in den numerischen Werten für den sogenannten Hub, d.h. die Differenz von Maximal- und Minimalwert der betrachteten Eigenschaften, und für die maximale Änderung, d.h. dem Maximum des Betrages der ersten Ableitung der betrachteten Eigenschaften entlang des Weges, den der Durchstoßpunkt des Hauptstrahls durch die Vorderfläche beschreibt.

Das erfindungsgemäße progressive Brillenglas zeichnet sich also dadurch aus, daß Änderung der Abbildungseigenschaften bei horizontalen Blickbewegungen und die damit korrelierten Irritationen möglichst gering sind.

Dies wird dadurch erreicht, daß zur Minimierung der Abbildungseigenschaften bei horizontalen Blickbewegungen entlang der Kurve, die von den Durchstoßpunkten der Hauptstrahlen durch die Vorderfläche erzeugt wird, wobei diese Hauptstrahlen durch den Punkt mit den Koordinaten (x-dx,y,s) zu Beginn der Bewegung bis hin zum Punkt mit den Koordinaten (x+dx,y,s) am Ende der Bewegung gehen, mit s= -40 mm und dx = 10 mm der Absolutbetrag der Differenz des minimal und des maximal auf der Kurve vorkommenden Astigmatismus kleiner als der im folgenden für verschiedene Werte der sphärischen Wirkung und der Addition beispielhaft angegebene Wert AH ist:

| Sph = -4.0 dpt, Add = 1.0 dpt | | |
|---|---|---|
| y = 15mm | | |
| x [mm] | -15.0 | 15.0 |
| AH [dpt] | 0.172 | 0.106 |
| y = -35mm | | |
| x [mm] | -15.0 | 15.0 |
| AH [dpt] | 0.527 | 0.567 |

| Sph = -4.0 dpt, Add = 2.0 dpt | | |
|---|---|---|
| y = 15mm | | |
| x [mm] | -15.0 | 15.0 |
| AH [dpt] | 0.401 | 0.341 |
| y = -35mm | | |
| x [mm] | -15.0 | 15.0 |
| AH [dpt] | 0.998 | 1.202 |

| Sph = -4.0 dpt, Add = 3.0 dpt | | |
|---|---|---|
| y = 15mm | | |
| x [mm] | -15.0 | 15.0 |
| AH [dpt] | 0.490 | 0.384 |
| y = -35mm | | |
| x [mm] | -15.0 | 15.0 |
| AH [dpt] | 1.617 | 2.003 |

| Sph = 0.5 dpt, Add = 1.0 dpt | | |
|---|---|---|
| y = 15mm | | |
| x [mm] | -15.0 | 15.0 |

(fortgesetzt)

| Sph = 0.5 dpt, Add = 1.0 dpt | | |
|---|---|---|
| y = 15mm | | |
| AH [dpt] | 0.197 | 0.130 |
| y = -35mm | | |
| x [mm] | -15.0 | 15.0 |
| AH [dpt] | 0.667 | 0.727 |

| Sph = 0.5 dpt, Add = 2.0 dpt | | |
|---|---|---|
| y = 15mm | | |
| x [mm] | -15.0 | 15.0 |
| AH [dpt] | 0.413 | 0.353 |
| y = -35mm | | |
| x [mm] | -15.0 | 15.0 |
| AH [dpt] | 1.074 | 1.194 |

| Sph = 0.5 dpt, Add = 3.0 dpt | | |
|---|---|---|
| y = 15mm | | |
| x [mm] | -15.0 | 15.0 |
| AH [dpt] | 0.523 | 0.390 |
| y = -35mm | | |
| x [mm] | -15.0 | 15.0 |
| AH [dpt] | 1.708 | 2.030 |

| Sph = 5.0 dpt, Add = 1.0 dpt | | |
|---|---|---|
| y = 15mm | | |
| x [mm] | -15.0 | 15.0 |
| AH [dpt] | 0.205 | 0.135 |
| y = -35mm | | |
| x [mm] | -15.0 | 15.0 |
| AH [dpt] | 0.719 | 0.732 |
| Sph = 5.0 dpt, Add = 2.0 dpt | | |
| y = 15mm | | |
| x [mm] | -15.0 | 15.0 |
| AH [dpt] | 0.411 | 0.333 |

(fortgesetzt)

| y = -35mm | | |
|---|---|---|
| x [mm] | -15.0 | 15.0 |
| AH [dpt] | 1.192 | 1.330 |

| Sph = 5.0 dpt, Add = 3.0 dpt | | |
|---|---|---|
| y = 15mm | | |
| x [mm] | -15.0 | 15.0 |
| AH [dpt] | 0.627 | 0.383 |
| y = -35mm | | |
| x [mm] | -15.0 | 15.0 |
| AH [dpt] | 1.772 | 2.271 |

Bevorzugt ist es weiterhin, wenn der Absolutbetrag der Differenz des minimal und des maximal auf der Kurve vorkommenden mittleren Brechwertes kleiner als der im folgenden für verschiedene Werte der sphärischen Wirkung und der Addition beispielhaft angegebene Wert BH ist:

| Sph = -4.0 dpt, Add = 1.0 dpt | | |
|---|---|---|
| y = 15mm | | |
| x [mm] | -15.0 | 15.0 |
| BH [dpt] | 0.116 | 0.068 |
| y = -35mm | | |
| x [mm] | -15.0 | 15.0 |
| BH [dpt] | 0.334 | 0.409 |

| Sph = -4.0 dpt, Add = 2.0 dpt | | |
|---|---|---|
| y = 15mm | | |
| x [mm] | -15.0 | 15.0 |
| BH [dpt] | 0.259 | 0.209 |
| y = -35mm | | |
| x [mm] | -15.0 | 15.0 |
| BH [dpt] | 0.687 | 0.890 |

| Sph = -4.0 dpt, Add = 3.0 dpt | | |
|---|---|---|
| y = 15mm | | |
| x [mm] | -15.0 | 15.0 |
| BH [dpt] | 0.347 | 0.235 |

(fortgesetzt)

| y = -35mm | | |
|---|---|---|
| x [mm] | -15.0 | 15.0 |
| BH [dpt] | 0.957 | 1.351 |

| Sph = 0.5 dpt, Add = 1.0 dpt | | |
|---|---|---|
| y = 15mm | | |
| x [mm] | -15.0 | 15.0 |
| BH [dpt] | 0.155 | 0.093 |
| y = -35mm | | |
| x [mm] | -15.0 | 15.0 |
| BH [dpt] | 0.384 | 0.504 |

| Sph = 0.5 dpt, Add = 2.0 dpt | | |
|---|---|---|
| y = 15mm | | |
| x [mm] | -15.0 | 15.0 |
| BH [dpt] | 0.326 | 0.248 |
| y = -35mm | | |
| x [mm] | -15.0 | 15.0 |
| BH [dpt] | 0.750 | 0.931 |

| Sph = 0.5 dpt, Add = 3.0 dpt | | |
|---|---|---|
| y = 15mm | | |
| x [mm] | -15.0 | 15.0 |
| BH [dpt] | 0.427 | 0.279 |
| y = -35mm | | |
| x [mm] | -15.0 | 15.0 |
| BH [dpt] | 1.081 | 1.362 |

| Sph = 5.0 dpt, Add = 1.0 dpt | | |
|---|---|---|
| y = 15mm | | |
| x [mm] | -15.0 | 15.0 |
| BH [dpt] | 0.101 | 0.063 |
| y = -35mm | | |
| x [mm] | -15.0 | 15.0 |
| BH [dpt] | 0.585 | 0.676 |

| Sph = 5.0 dpt, Add = 2.0 dpt | | |
|---|---|---|
| y = 15mm | | |
| x [mm] | -15.0 | 15.0 |
| BH [dpt] | 0.286 | 0.218 |
| y = -35mm | | |
| x [mm] | -15.0 | 15.0 |
| BH [dpt] | 0.981 | 1.197 |

| Sph = 5.0 dpt, Add = 3.0 dpt | | |
|---|---|---|
| y = 15mm | | |
| x [mm] | -15.0 | 15.0 |
| BH [dpt] | 0.447 | 0.257 |
| y = -35mm | | |
| x [mm] | -15.0 | 15.0 |
| BH [dpt] | 1.164 | 1.674 |

Bei einer weiteren bevorzugten Ausführungsform ist der Absolutbetrag des Maximums der ersten Ableitung des Astigmatismus entlang der Kurve kleiner als der im folgenden angegebene Wert AG:

| Sph = -4.0 dpt, Add = 1.0 dpt | | |
|---|---|---|
| y = 15mm | | |
| x [mm] | -15.0 | 15.0 |
| AG [dpt/mm] | 0.027 | 0.021 |
| y = -35mm | | |
| x [mm] | -15.0 | 15.0 |
| AG [dpt/mm] | 0.091 | 0.088 |

| Sph = -4.0 dpt, Add = 2.0 dpt | | |
|---|---|---|
| y = 15mm | | |
| x [mm] | -15.0 | 15.0 |
| AG [dpt/mm] | 0.065 | 0.054 |
| y = -35mm | | |
| x [mm] | -15.0 | 15.0 |
| AG [dpt/mm] | 0.168 | 0.179 |

| Sph = -4.0 dpt, Add = 3.0 dpt | | |
|---|---|---|
| y = 15mm | | |
| x [mm] | -15.0 | 15.0 |

8

(fortgesetzt)

| Sph = -4.0 dpt, Add = 3.0 dpt | | |
|---|---|---|
| y = 15mm | | |
| AG [dpt/mm] | 0.077 | 0.060 |
| y = -35mm | | |
| x [mm] | -15.0 | 15.0 |
| AG [dpt/mm] | 0.276 | 0.284 |

| Sph = 0.5 dpt, Add = 1.0 dpt | | |
|---|---|---|
| y = 15mm | | |
| x [mm] | -15.0 | 15.0 |
| AG [dpt/mm] | 0.027 | 0.021 |
| y = -35mm | | |
| x [mm] | -15.0 | 15.0 |
| AG [dpt/mm] | 0.105 | 0.105 |

| Sph = 0.5 dpt, Add = 2.0 dpt | | |
|---|---|---|
| y = 15mm | | |
| x [mm] | -15.0 | 15.0 |
| AG [dpt/mm] | 0.060 | 0.049 |
| y = -35mm | | |
| x [mm] | -15.0 | 15.0 |
| AG [dpt/mm] | 0.168 | 0.151 |

| Sph = 0.5 dpt, Add = 3.0 dpt | | |
|---|---|---|
| y = 15mm | | |
| x [mm] | -15.0 | 15.0 |
| AG [dpt/mm] | 0.079 | 0.053 |
| y = -35mm | | |
| x [mm] | -15.0 | 15.0 |
| AG [dpt/mm] | 0.285 | 0.256 |

| Sph = 5.0 dpt, Add = 1.0 dpt | | |
|---|---|---|
| y = 15mm | | |
| x [mm] | -15.0 | 15.0 |
| AG [dpt/mm] | 0.027 | 0.017 |

(fortgesetzt)

| y = -35mm | | |
|---|---|---|
| x [mm] | -15.0 | 15.0 |
| AG [dpt/mm] | 0.093 | 0.094 |

| Sph = 5.0 dpt, Add = 2.0 dpt | | |
|---|---|---|
| y = 15mm | | |
| x [mm] | -15.0 | 15.0 |
| AG [dpt/mm] | 0.052 | 0.040 |
| y = -35mm | | |
| x [mm] | -15.0 | 15.0 |
| AG [dpt/mm] | 0.183 | 0.155 |

| Sph = 5.0 dpt, Add = 3.0 dpt | | |
|---|---|---|
| y = 15mm | | |
| x [mm] | -15.0 | 15.0 |
| AG [dpt/mm] | 0.075 | 0.043 |
| y = -35mm | | |
| x [mm] | -15.0 | 15.0 |
| AG [dpt/mm] | 0.284 | 0.252 |

Insbesondere kann der Absolutbetrag des Maximums der ersten Ableitung des mittleren Brechwertes entlang der Kurve kleiner sein als der Wert BG:

| Sph = -4.0 dpt, Add = 1.0 dpt | | |
|---|---|---|
| y = 15mm | | |
| x [mm] | -15.0 | 15.0 |
| BG [dpt/mm] | 0.021 | 0.014 |
| y = -35mm | | |
| x [mm] | -15.0 | 15.0 |
| BG [dpt/mm] | 0.066 | 0.065 |

| Sph = -4.0 dpt, Add = 2.0 dpt | | |
|---|---|---|
| y = 15mm | | |
| x [mm] | -15.0 | 15.0 |
| BG [dpt/mm] | 0.037 | 0.029 |
| y = -35mm | | |
| x [mm] | -15.0 | 15.0 |

(fortgesetzt)

| y = -35mm | | |
|---|---|---|
| BG [dpt/mm] | 0.129 | 0.153 |

| Sph = -4.0 dpt, Add = 3.0 dpt | | |
|---|---|---|
| y = 15mm | | |
| x [mm] | -15.0 | 15.0 |
| BG [dpt/mm] | 0.051 | 0.032 |
| y = -35mm | | |
| x [mm] | -15.0 | 15.0 |
| BG [dpt/mm] | 0.187 | 0.223 |

| Sph = 0.5 dpt, Add = 1.0 dpt | | |
|---|---|---|
| y = 15mm | | |
| x [mm] | -15.0 | 15.0 |
| BG [dpt/mm] | 0.021 | 0.016 |
| y = -35mm | | |
| x [mm] | -15.0 | 15.0 |
| BG [dpt/mm] | 0.072 | 0.073 |

| Sph = 0.5 dpt, Add = 2.0 dpt | | |
|---|---|---|
| y = 15mm | | |
| x [mm] | -15.0 | 15.0 |
| BG [dpt/mm] | 0.042 | 0.034 |
| y = -35mm | | |
| x [mm] | -15.0 | 15.0 |
| BG [dpt/mm] | 0.137 | 0.131 |

| Sph = 0.5 dpt, Add = 3.0 dpt | | |
|---|---|---|
| y = 15mm | | |
| x [mm] | -15.0 | 15.0 |
| BG [dpt/mm] | 0.058 | 0.036 |
| | | |
| y = -35mm | | |
| x [mm] | -15.0 | 15.0 |
| BG [dpt/mm] | 0.208 | 0.177 |

| Sph = 5.0 dpt, Add = 1.0 dpt | | |
|---|---|---|
| y = 15mm | | |
| x [mm] | -15.0 | 15.0 |
| BG [dpt/mm] | 0.012 | 0.008 |
| y = -35mm | | |
| x [mm] | -15.0 | 15.0 |
| BG [dpt/mm] | 0.085 | 0.084 |

| Sph = 5.0 dpt, Add = 2.0 dpt | | |
|---|---|---|
| y = 15mm | | |
| x [mm] | -15.0 | 15.0 |
| BG [dpt/mm] | 0.034 | 0.025 |
| y = -35mm | | |
| x [mm] | -15.0 | 15.0 |
| BG [dpt/mm] | 0.176 | 0.154 |

| Sph = 5.0 dpt, Add = 3.0 dpt | | |
|---|---|---|
| y = 15mm | | |
| x [mm] | -15.0 | 15.0 |
| BG [dpt/mm] | 0.052 | 0.027 |
| y = -35mm | | |
| x [mm] | -15.0 | 15.0 |
| BG [dpt/mm] | 0.228 | 0.194 |

Dabei gelten für nicht aufgeführte Verordnungen inter- bzw. extrapolierte Werte.

**Patentansprüche**

1. Verfahren zum Herstellen eines progressiven Brillenglases mit den Schritten:

- Vorgeben von Gebrauchswerten
- Vorgeben eines Koordinatenursprungs im objektseitigen Scheitel des Brillenglases
- Herstellen des Brillenglases derart, daß das Brillenglas

- einen zum Blicken in größere Entfernungen und insbesondere "ins Unendliche" ausgelegten Bereich (Fernteil) aufweist,
- einen zum Blicken in kürzere Entfernungen und insbesondere "Lese-Entfernungen" ausgelegten Bereich (Nahteil) aufweist, und
- eine zwischen Fernteil und Nahteil angeordneten Progressionszone aufweist, in der die Wirkung des Brillenglases von dem Wert in dem im Fernteil gelegenen Fernbezugspunkt auf den Wert des im Nahteil gelegenen Nahbezugspunktes längs einer zur Nase hin gewundenen Kurve (Hauptlinie) zunimmt,

**dadurch gekennzeichnet, daß** zur Minimierung der Änderung des Abbildungseigenschaften bei horizontalen Blickbewegungen entlang der Kurve, die von den Durchstoßpunkten der Hauptstrahlen durch die Vorderfläche erzeugt wird, wobei diese Hauptstrahlen durch den Objektpunkt mit den Koordinaten (x-dx,y,s) zu Beginn der Bewegung bis hin zum Objektpunkt mit den Koordinaten (x+dx,y,s) am Ende der Bewegung gehen, mit s= -40 mm und dx = 10 mm der Absolutbetrag der Differenz des minimal und des maximal auf der Kurve vorkommenden Astigmatismus ist kleiner als AH:

| Sph = -4.0 dpt, Add = 1.0 dpt | | |
|---|---|---|
| y = 15mm | | |
| x [mm] | -15.0 | 15.0 |
| AH [dpt] | 0.172 | 0.106 |
| y = -35mm | | |
| x [mm] | -15.0 | 15.0 |
| AH [dpt] | 0.527 | 0.567 |

| Sph = -4.0 dpt, Add = 2.0 dpt | | |
|---|---|---|
| y = 15mm | | |
| x [mm] | -15.0 | 15.0 |
| AH [dpt] | 0.401 | 0.341 |
| y = -35mm | | |
| x [mm] | -15.0 | 15.0 |
| AH [dpt] | 0.998 | 1.202 |

| Sph = -4.0 dpt, Add = 3.0 dpt | | |
|---|---|---|
| y = 15mm | | |
| x [mm] | -15.0 | 15.0 |
| AH [dpt] | 0.490 | 0.384 |
| y = -35mm | | |
| x [mm] | -15.0 | 15.0 |
| AH [dpt] | 1.617 | 2.003 |

| Sph = 0.5 dpt, Add = 1.0 dpt | | |
|---|---|---|
| y = 15mm | | |
| x [mm] | -15.0 | 15.0 |
| AH [dpt] | 0.197 | 0.130 |
| y = -35mm | | |
| x [mm] | -15.0 | 15.0 |
| AH [dpt] | 0.667 | 0.727 |

| Sph = 0.5 dpt, Add = 2.0 dpt | | |
|---|---|---|
| y = 15mm | | |
| x [mm] | -15.0 | 15.0 |
| AH [dpt] | 0.413 | 0.353 |
| y = -35mm | | |
| x [mm] | -15.0 | 15.0 |
| AH [dpt] | 1.074 | 1.194 |

| Sph = 0.5 dpt, Add = 3.0 dpt | | |
|---|---|---|
| y = 15mm | | |
| x [mm] | -15.0 | 15.0 |
| AH [dpt] | 0.523 | 0.390 |
| y = -35mm | | |
| x [mm] | -15.0 | 15.0 |
| AH [dpt] | 1.708 | 2.030 |

| Sph = 5.0 dpt, Add = 1.0 dpt | | |
|---|---|---|
| y = 15mm | | |
| x [mm] | -15.0 | 15.0 |
| AH [dpt] | 0.205 | 0.135 |
| y = -35mm | | |
| x [mm] | -15.0 | 15.0 |
| AH [dpt] | 0.719 | 0.732 |

| Sph = 5.0 dpt, Add = 2.0 dpt | | |
|---|---|---|
| y = 15mm | | |
| x [mm] | -15.0 | 15.0 |
| AH [dpt] | 0.411 | 0.333 |
| y = -35mm | | |
| x [mm] | -15.0 | 15.0 |
| AH [dpt] | 1.192 | 1.330 |

| Sph = 5.0 dpt, Add = 3.0 dpt | | |
|---|---|---|
| y = 15mm | | |
| x [mm] | -15.0 | 15.0 |
| AH [dpt] | 0.627 | 0.383 |

(fortgesetzt)

| y = -35mm | | |
|---|---|---|
| x [mm] | -15.0 | 15.0 |
| AH [dpt] | 1.772 | 2.271 |

2. Verfahren nach Anspruch 1,
**dadurch gekennzeichnet, daß** der Absolutbetrag der Differenz des minimal und des maximal auf der Kurve vorkommenden mittleren Brechwertes ist kleiner als BH:

| Sph = -4.0 dpt, Add = 1.0 dpt | | |
|---|---|---|
| y = 15mm | | |
| x [mm] | -15.0 | 15.0 |
| BH [dpt] | 0.116 | 0.068 |
| y = -35mm | | |
| x [mm] | -15.0 | 15.0 |
| BH [dpt] | 0.334 | 0.409 |

| Sph = -4.0 dpt, Add = 2.0 dpt | | |
|---|---|---|
| y = 15mm | | |
| x [mm] | -15.0 | 15.0 |
| BH [dpt] | 0.259 | 0.209 |
| y = -35mm | | |
| x [mm] | -15.0 | 15.0 |
| BH [dpt] | 0.687 | 0.890 |

| Sph = -4.0 dpt, Add = 3.0 dpt | | |
|---|---|---|
| y = 15mm | | |
| x [mm] | -15.0 | 15.0 |
| BH [dpt] | 0.347 | 0.235 |
| y = -35mm | | |
| x [mm] | **-15.0** | 15.0 |
| BH [dpt] | 0.957 | 1.351 |

| Sph = 0.5 dpt, Add = 1.0 dpt | | |
|---|---|---|
| y = 15mm | | |
| x [mm] | -15.0 | 15.0 |
| BH [dpt] | 0.155 | 0.093 |

(fortgesetzt)

| y = -35mm | | |
|---|---|---|
| x [mm] | -15.0 | 15.0 |
| BH [dpt] | 0.384 | 0.504 |

| Sph = 0.5 dpt, Add = 2.0 dpt | | |
|---|---|---|
| y = 15mm | | |
| x [mm] | -15.0 | 15.0 |
| BH [dpt] | 0.326 | 0.248 |
| y = -35mm | | |
| x [mm] | -15.0 | 15.0 |
| BH [dpt] | 0.750 | 0.931 |

| Sph = 0.5 dpt, Add = 3.0 dpt | | |
|---|---|---|
| y = 15mm | | |
| x [mm] | -15.0 | 15.0 |
| BH [dpt] | 0.427 | 0.279 |
| y = -35mm | | |
| x [mm] | -15.0 | 15.0 |
| BH [dpt] | 1.081 | 1.362 |

| Sph = 5.0 dpt, Add = 1.0 dpt | | |
|---|---|---|
| y = 15mm | | |
| x [mm] | -15.0 | 15.0 |
| BH [dpt] | 0.101 | 0.063 |
| y = -35mm | | |
| x [mm] | -15.0 | 15.0 |
| BH [dpt] | 0.585 | 0.676 |

| Sph = 5.0 dpt, Add = 2.0 dpt | | |
|---|---|---|
| y = 15mm | | |
| x [mm] | -15.0 | 15.0 |
| BH [dpt] | 0.286 | 0.218 |
| y = -35mm | | |
| x [mm] | -15.0 | 15.0 |
| BH [dpt] | 0.981 | 1.197 |

| Sph = 5.0 dpt, Add = 3.0 dpt | | |
|---|---|---|
| y = 15mm | | |
| x [mm] | -15.0 | 15.0 |
| BH [dpt] | 0.447 | 0.257 |
| y = -35mm | | |
| x [mm] | -15.0 | 15.0 |
| BH [dpt] | 1.164 | 1.674 |

**3.** Verfahren nach Anspruch 1 oder 2,
**dadurch gekennzeichnet, daß** der Absolutbetrag des Maximums der ersten Ableitung des Astigmatismus entlang der Kurve ist kleiner als AG:

| Sph = -4.0 dpt, Add = 1.0 dpt | | |
|---|---|---|
| y = 15mm | | |
| x [mm] | -15.0 | 15.0 |
| AG [dpt/mm] | 0.027 | 0.021 |
| y = -35mm | | |
| x [mm] | -15.0 | 15.0 |
| AG [dpt/mm] | 0.091 | 0.088 |

| Sph = -4.0 dpt, Add = 2.0 dpt | | |
|---|---|---|
| y = 15mm | | |
| x [mm] | -15.0 | 15.0 |
| AG [dpt/mm] | 0.065 | 0.054 |
| y = -35mm | | |
| x [mm] | -15.0 | 15.0 |
| AG [dpt/mm] | 0.168 | 0.179 |

| Sph = -4.0 dpt, Add = 3.0 dpt | | |
|---|---|---|
| y = 15mm | | |
| x [mm] | -15.0 | 15.0 |
| AG [dpt/mm] | 0.077 | 0.060 |
| y = -35mm | | |
| x [mm] | -15.0 | 15.0 |
| AG [dpt/mm] | 0.276 | 0.284 |

| Sph = 0.5 dpt, Add = 1.0 dpt | | |
|---|---|---|
| y = 15mm | | |
| x [mm] | -15.0 | 15.0 |
| AG [dpt/mm] | 0.027 | 0.021 |
| y = -35mm | | |
| x [mm] | -15.0 | 15.0 |
| AG [dpt/mm] | 0.105 | 0.105 |

| Sph = 0.5 dpt, Add = 2.0 dpt | | |
|---|---|---|
| y = 15mm | | |
| x [mm] | -15.0 | 15.0 |
| AG [dpt/mm] | 0.060 | 0.049 |
| y = -35mm | | |
| x [mm] | -15.0 | 15.0 |
| AG [dpt/mm] | 0.168 | 0.151 |

| Sph = 0.5 dpt, Add = 3.0 dpt | | |
|---|---|---|
| y = 15mm | | |
| x [mm] | -15.0 | 15.0 |
| AG [dpt/mm] | 0.079 | 0.053 |
| y = -35mm | | |
| x [mm] | -15.0 | 15.0 |
| AG [dpt/mm] | 0.285 | 0.256 |

| Sph = 5.0 dpt, Add = 1.0 dpt | | |
|---|---|---|
| y = 15mm | | |
| x [mm] | -15.0 | 15.0 |
| AG [dpt/mm] | 0.027 | 0.017 |
| y = -35mm | | |
| x [mm] | -15.0 | 15.0 |
| AG [dpt/mm] | 0.093 | 0.094 |

| Sph = 5.0 dpt, Add = 2.0 dpt | | |
|---|---|---|
| y = 15mm | | |
| x [mm] | -15.0 | 15.0 |
| AG [dpt/mm] | 0.052 | 0.040 |

(fortgesetzt)

| y = -35mm | | |
|---|---|---|
| x [mm] | -15.0 | 15.0 |
| AG [dpt/mm] | 0.183 | 0.155 |

| Sph = 5.0 dpt, Add = 3.0 dpt | | |
|---|---|---|
| y = 15mm | | |
| x [mm] | -15.0 | 15.0 |
| AG [dpt/mm] | 0.075 | 0.043 |
| y = -35mm | | |
| x [mm] | -15.0 | 15.0 |
| AG [dpt/mm] | 0.284 | 0.252 |

4. Verfahren nach einem der Ansprüche 1 bis 3,
   **dadurch gekennzeichnet, daß** der Absolutbetrag des Maximums der ersten Ableitung des mittleren Brechwertes entlang der Kurve ist kleiner als BG:

| Sph = -4.0 dpt, Add = 1.0 dpt | | |
|---|---|---|
| y = 15mm | | |
| x [mm] | -15.0 | 15.0 |
| BG [dpt/mm] | 0.021 | 0.014 |
| y = -35mm | | |
| x [mm] | -15.0 | 15.0 |
| BG [dpt/mm] | 0.066 | 0.065 |

| Sph = -4.0 dpt, Add = 2.0 dpt | | |
|---|---|---|
| y = 15mm | | |
| x [mm] | -15.0 | 15.0 |
| BG [dpt/mm] | 0.037 | 0.029 |
| y = -35mm | | |
| x [mm] | -15.0 | 15.0 |
| BG [dpt/mm] | 0.129 | 0.153 |

| Sph = -4.0 dpt, Add = 3.0 dpt | | |
|---|---|---|
| y = 15mm | | |
| x [mm] | -15.0 | 15.0 |
| BG [dpt/mm] | 0.051 | 0.032 |

(fortgesetzt)

| y = -35mm | | |
|---|---|---|
| x [mm] | -15.0 | 15.0 |
| BG [dpt/mm] | 0.187 | 0.223 |

| Sph = 0.5 dpt, Add = 1.0 dpt | | |
|---|---|---|
| y = 15mm | | |
| x [mm] | -15.0 | 15.0 |
| BG [dpt/mm] | 0.021 | 0.016 |
| y = -35mm | | |
| x [mm] | -15.0 | 15.0 |
| BG [dpt/mm] | 0.072 | 0.073 |

| Sph = 0.5 dpt, Add = 2.0 dpt | | |
|---|---|---|
| y = 15mm | | |
| x [mm] | -15.0 | 15.0 |
| BG [dpt/mm] | 0.042 | 0.034 |
| y = -35mm | | |
| x [mm] | -15.0 | 15.0 |
| BG [dpt/mm] | 0.137 | 0.131 |

| Sph = 0.5 dpt, Add = 3.0 dpt | | |
|---|---|---|
| y = 15mm | | |
| x [mm] | -15.0 | 15.0 |
| BG [dpt/mm] | 0.058 | 0.036 |
| y = -35mm | | |
| x [mm] | -15.0 | 15.0 |
| BG [dpt/mm] | 0.208 | 0.177 |

| Sph = 5.0 dpt, Add = 1.0 dpt | | |
|---|---|---|
| y = 15mm | | |
| x [mm] | -15.0 | 15.0 |
| BG [dpt/mm] | 0.012 | 0.008 |
| y = -35mm | | |
| x [mm] | -15.0 | 15.0 |
| BG [dpt/mm] | 0.085 | 0.084 |

| Sph = 5.0 dpt, Add = 2. 0 dpt | | |
| --- | --- | --- |
| y = 15mm | | |
| x [mm] | -15.0 | 15.0 |
| BG [dpt/mm] | 0.034 | 0.025 |
| y = -35mm | | |
| x [mm] | -15.0 | 15.0 |
| BG [dpt/mm] | 0.176 | 0.154 |

| Sph = 5.0 dpt, Add = 3.0 dpt | | |
| --- | --- | --- |
| y = 15mm | | |
| x [mm] | -15.0 | 15.0 |
| BG [dpt/mm] | 0.052 | 0.027 |
| y = -35mm | | |
| x [mm] | -15.0 | 15.0 |
| BG [dpt/mm] | 0.228 | 0.194 |

5. Verfahren nach einem der Ansprüche 1 bis 4,
**dadurch gekennzeichnet, daß** für nicht aufgeführte Verordnungen inter- bzw. extrapolierte Werte gelten.

**Claims**

1. Method for the production of a progressive spectacle lens with the steps:

    - specification of use-values
    - specification of a coordinate origin in the object-side vertex of the spectacle lens
    - production of the spectacle lens in such a manner that the spectacle lens

        - has a region (distance part) designed for viewing at larger distances and in particular "to infinity",
        - has a region (near part) designed for viewing at shorter distances and in particular "reading distances", and
        - has a progression zone which is disposed between distance part and near part, in which the effect of the spectacle lens increases from the value in the distance reference point situated in the distance part to the value of the near reference point situated in the near part along a curve (principal line) which veers towards the nose,

    **characterised in that**, in order to minimise the change in the imaging properties during horizontal viewing movements along the curve which is produced by the intersection points of the principal rays through the front surface, these principal rays proceeding through the object point with the coordinates (x - dx, y, s) at the start of the movement up to the object point with the coordinates (x + dx, y, s) at the end of the movement, with s = -40 mm and dx = 10 mm, the absolute amount of the difference of the minimum and of the maximum astigmatism occurring on the curve being smaller than AH:

| Sph = -4.0 dpt, Add = 1.0 dpt | | |
| --- | --- | --- |
| y = 15mm | | |
| x [mm] | -15.0 | 15.0 |
| AH [dpt] | 0.172 | 0.106 |

(continued)

| y = -35mm | | |
|---|---|---|
| x [mm] | -15.0 | 15.0 |
| AH [dpt] | 0.527 | 0.567 |

| Sph = -4.0 dpt, Add = 2.0 dpt | | |
|---|---|---|
| y = 15mm | | |
| x [mm] | -15.0 | 15.0 |
| AH [dpt] | 0.401 | 0.341 |
| y = -35mm | | |
| x [mm] | -15.0 | 15.0 |
| AH [dpt] | 0.998 | 1.202 |

| Sph = -4.0 dpt, Add = 3.0 dpt | | |
|---|---|---|
| y = 15mm | | |
| x [mm] | -15.0 | 15.0 |
| AH [dpt] | 0.490 | 0.384 |
| y = -35mm | | |
| x [mm] | -15.0 | 15.0 |
| AH [dpt] | 1.617 | 2.003 |

| Sph = 0.5 dpt, Add = 1.0 dpt | | |
|---|---|---|
| y = 15mm | | |
| x [mm] | -15.0 | 15.0 |
| AH [dpt] | 0.197 | 0.130 |
| y = -35mm | | |
| x [mm] | -15.0 | 15.0 |
| AH [dpt] | 0.667 | 0.727 |

| Sph = 0.5 dpt, Add = 2.0 dpt | | |
|---|---|---|
| y = 15mm | | |
| x [mm] | -15.0 | 15.0 |
| AH [dpt] | 0.413 | 0.353 |
| y = -35mm | | |
| x [mm] | -15.0 | 15.0 |
| AH [dpt] | 1.074 | 1.194 |

| Sph = 0.5 dpt, Add = 3.0 dpt | | |
|---|---|---|
| y = 15mm | | |
| x [mm] | -15.0 | 15.0 |
| AH [dpt] | 0.523 | 0.390 |
| y = -35mm | | |
| x [mm] | -15.0 | 15.0 |
| AH [dpt] | 1.708 | 2.030 |

| Sph = 5.0 dpt, Add = 1.0 dpt | | |
|---|---|---|
| y = 15mm | | |
| x [mm] | -15.0 | 15.0 |
| AH [dpt] | 0.205 | 0.135 |
| y = -35mm | | |
| x [mm] | -15.0 | 15.0 |
| AH [dpt] | 0.719 | 0.732 |
| Sph = 5.0 dpt, Add = 2.0 dpt | | |
| y = 15mm | | |
| x [mm] | -15.0 | 15.0 |
| AH [dpt] | 0.411 | 0.333 |
| y = -35mm | | |
| x [mm] | -15.0 | 15.0 |
| AH [dpt] | 1.192 | 1.330 |

| Sph = 5.0 dpt, Add = 3.0 dpt | | |
|---|---|---|
| y = 15mm | | |
| x [mm] | -15.0 | 15.0 |
| AH [dpt] | 0.627 | 0.383 |
| y = -35mm | | |
| x [mm] | -15.0 | 15.0 |
| AH [dpt] | 1.772 | 2.271 |

2. Method according to claim 1, **characterised in that** the absolute amount of the difference of the minimum and maximum average lens power occurring on the curve is smaller than BH:

| Sph = -4.0 dpt, Add = 1.0 dpt | | |
|---|---|---|
| y = 15mm | | |
| x [mm] | -15.0 | 15.0 |

(continued)

| Sph = -4.0 dpt, Add = 1.0 dpt | | |
|---|---|---|
| y = 15mm | | |
| BH [dpt] | 0.116 | 0.068 |
| y = -35mm | | |
| x [mm] | -15.0 | 15.0 |
| BH [dpt] | 0.334 | 0.409 |

| Sph = -4.0 dpt, Add = 2.0 dpt | | |
|---|---|---|
| y = 15mm | | |
| x [mm] | -15.0 | 15.0 |
| BH [dpt] | 0.259 | 0.209 |
| y = -35mm | | |
| x [mm] | -15.0 | 15.0 |
| BH [dpt] | 0.687 | 0.890 |

| Sph = -4.0 dpt, Add = 3.0 dpt | | |
|---|---|---|
| y = 15mm | | |
| x [mm] | -15.0 | 15.0 |
| BH [dpt] | 0.347 | 0.235 |
| y = -35mm | | |
| x [mm] | -15.0 | 15.0 |
| BH [dpt] | 0.957 | 1.351 |

| Sph = 0.5 dpt, Add = 1.0 dpt | | |
|---|---|---|
| y = 15mm | | |
| x [mm] | -15.0 | 15.0 |
| BH [dpt] | 0.155 | 0.093 |
| y = -35mm | | |
| x [mm] | -15.0 | 15.0 |
| BH [dpt] | 0.384 | 0.504 |

| Sph = 0.5 dpt, Add = 2.0 dpt | | |
|---|---|---|
| y = 15mm | | |
| x [mm] | -15.0 | 15.0 |
| BH [dpt] | 0.326 | 0.248 |

(continued)

| y = -35mm | | |
|---|---|---|
| x [mm] | -15.0 | 15.0 |
| BH [dpt] | 0.750 | 0.931 |

| Sph = 0.5 dpt, Add = 3.0 dpt | | |
|---|---|---|
| y = 15mm | | |
| x [mm] | -15.0 | 15.0 |
| BH [dpt] | 0.427 | 0.279 |
| y = -35mm | | |
| x [mm] | -15.0 | 15.0 |
| BH [dpt] | 1.081 | 1.362 |

| Sph = 5.0 dpt, Add = 1.0 dpt | | |
|---|---|---|
| y = 15mm | | |
| x [mm] | -15.0 | 15.0 |
| BH [dpt] | 0.101 | 0.063 |
| y = -35mm | | |
| x [mm] | -15.0 | 15.0 |
| BH [dpt] | 0.585 | 0.676 |

| Sph = 5.0 dpt, Add = 2.0 dpt | | |
|---|---|---|
| y = 15mm | | |
| x [mm] | -15.0 | 15.0 |
| BH [dpt] | 0.286 | 0.218 |
| y = -35mm | | |
| x [mm] | -15.0 | 15.0 |
| BH [dpt] | 0.981 | 1.197 |

| Sph = 5.0 dpt, Add = 3.0 dpt | | |
|---|---|---|
| y = 15mm | | |
| x [mm] | -15.0 | 15.0 |
| BH [dpt] | 0.447 | 0.257 |
| y = -35mm | | |
| x [mm] | -15.0 | 15.0 |
| BH [dpt] | 1.164 | 1.674 |

3. Method according to claim 1 or 2,
   **characterised** m that the absolute amount of the maximum of the first deviation of the astigmatism along the curve is smaller than AG:

| sph = -4.0 dpt, Add = 1.0 dpt | | |
|---|---|---|
| y = 15mm | | |
| x [mm] | -15.0 | 15.0 |
| AG [dpt/mm] | 0.027 | 0.021 |
| y = -35mm | | |
| x [mm] | -15.0 | 15.0 |
| AG [dpt/mm] | 0.091 | 0.088 |

| Sph = -4.0 dpt, Add = 2.0 dpt | | |
|---|---|---|
| y = 15mm | | |
| x [mm] | -15.0 | 15.0 |
| AG [dpt/mm] | 0.065 | 0.054 |
| y = -35mm | | |
| x [mm] | -15.0 | 15.0 |
| AG [dpt/mm] | 0.168 | 0.179 |

| Sph = -4.0 dpt, Add = 3.0 dpt | | |
|---|---|---|
| y = 15mm | | |
| x [mm] | -15.0 | 15.0 |
| AG [dpt/mm] | 0.077 | 0.060 |
| y = -35mm | | |
| x [mm] | -15.0 | 15.0 |
| AG [dpt/mm] | 0.276 | 0.284 |

| Sph = 0.5 dpt, Add = 1.0 dpt | | |
|---|---|---|
| y = 15mm | | |
| x [mm] | -15.0 | 15.0 |
| AG [dpt/mm] | 0.027 | 0.021 |
| y = -35mm | | |
| x [mm] | -15.0 | 15.0 |
| AG [dpt/mm] | 0.105 | 0.105 |

| Sph = 0.5 dpt, Add = 2.0 dpt | | |
|---|---|---|
| y = 15mm | | |
| x [mm] | -15.0 | 15.0 |
| AG [dpt/mm] | 0.060 | 0.049 |
| y = -35mm | | |
| x [mm] | -15.0 | 15.0 |
| AG [dpt/mm] | 0.168 | 0.151 |

| Sph = 0.5 dpt, Add = 3.0 dpt | | |
|---|---|---|
| y = 15mm | | |
| x [mm] | -15.0 | 15.0 |
| AG [dpt/mm] | 0.079 | 0.053 |
| y = -35mm | | |
| x [mm] | -15.0 | 15.0 |
| AG [dpt/mm] | 0.285 | 0.256 |

| Sph = 5.0 dpt, Add = 1.0 dpt | | |
|---|---|---|
| y = 15mm | | |
| x [mm] | -15.0 | 15.0 |
| AG [dpt/mm] | 0.027 | 0.017 |
| y = -35mm | | |
| x [mm] | -15.0 | 15.0 |
| AG [dpt/mm] | 0.093 | 0.094 |

| Sph = 5.0 dpt, Add = 2.0 dpt | | |
|---|---|---|
| y = 15mm | | |
| x [mm] | -15.0 | 15.0 |
| AG [dpt/mm] | 0.052 | 0.040 |
| y = -35mm | | |
| x [mm] | -15.0 | 15.0 |
| AG [dpt/mm] | 0.183 | 0.155 |

| Sph = 5.0 dpt, Add = 3.0 dpt | | |
|---|---|---|
| y = 15mm | | |
| x [mm] | -15.0 | 15.0 |
| AG [dpt/mm] | 0.075 | 0.043 |

(continued)

| y = -35mm | | |
|---|---|---|
| x [mm] | -15.0 | 15.0 |
| AG [dpt/mm] | 0.284 | 0.252 |

4. Method according to one of the claims 1 to 3,
**characterised in that** the absolute amount of the maximum of the first deviation of the average lens power along the curve is smaller than BG:

| Sph = -4.0 dpt, Add = 1.0 dpt | | |
|---|---|---|
| y = 15mm | | |
| x [mm] | -15.0 | 15.0 |
| BG [dpt/mm] | 0.021 | 0.014 |
| y = -35mm | | |
| x [mm] | -15.0 | 15.0 |
| BG [dpt/mm] | 0.066 | 0.065 |

| Sph = -4.0 dpt, Add = 2.0 dpt | | |
|---|---|---|
| y = 15mm | | |
| x [mm] | -15.0 | 15.0 |
| BG [dpt/mm] | 0.037 | 0.029 |
| y = -35mm | | |
| x [mm] | -15.0 | 15.0 |
| BG [dpt/mm] | 0.129 | 0.153 |

| Sph = -4.0 dpt, Add = 3.0 dpt | | |
|---|---|---|
| y = 15mm | | |
| x [mm] | -15.0 | 15.0 |
| BG [dpt/mm] | 0.051 | 0.032 |
| y = -35mm | | |
| x [mm] | -15.0 | 15.0 |
| BG [dpt/mm] | 0.187 | 0.223 |

| Sph = 0.5 dpt, Add = 1.0 dpt | | |
|---|---|---|
| y = 1.5mm | | |
| x [mm] | -15.0 | 15.0 |
| BG [dpt/mm] | 0.021 | 0.016 |

(continued)

| y = -35mm | | |
|---|---|---|
| x [mm] | -15.0 | 15.0 |
| BG [dpt/mm] | 0.072 | 0.073 |

| Sph = 0.5 dpt, Add = 2.0 dpt | | |
|---|---|---|
| y = 15mm | | |
| x [mm] | -15.0 | 15.0 |
| BG [dpt/mm] | 0.042 | 0.034 |
| y = -35mm | | |
| x [mm] | -15.0 | 15.0 |
| BG [dpt/mm] | 0.137 | 0.131 |

| Sph = 0.5 dpt, Add = 3.0 dpt | | |
|---|---|---|
| y = 15mm | | |
| x [mm] | -15.0 | 15.0 |
| BG [dpt/mm] | 0.058 | 0.036 |
| y = -35mm | | |
| x [mm] | -15.0 | 15.0 |
| BG [dpt/mm] | 0.208 | 0.177 |

| Sph = 5.0 dpt, Add = 1.0 dpt | | |
|---|---|---|
| y = 15mm | | |
| x [mm] | -15.0 | 15.0 |
| BG [dpt/mm] | 0.012 | 0.008 |
| y = -35mm | | |
| x [mm] | -15.0 | 15.0 |
| BG [dpt/mm] | 0.085 | 0.084 |

| Sph = 5.0 dpt, Add = 2.0 dpt | | |
|---|---|---|
| y = 15mm | | |
| x [mm] | -15.0 | 15.0 |
| BG [dpt/mm] | 0.034 | 0.025 |
| y = -35mm | | |
| x [mm] | -15.0 | 15.0 |
| BG [dpt/mm] | 0.176 | 0.154 |

**EP 1 277 078 B1**

| Sph = 5.0 dpt, Add = 3.0 dpt | | |
|---|---|---|
| y = 15mm | | |
| x [mm] | -15.0 | 15.0 |
| BG [dpt/mm] | 0.052 | 0.027 |
| y = -35mm | | |
| x [mm] | -15.0 | 15.0 |
| BG [dpt/mm] | 0.228 | 0.194 |

5. Method according to one of the claims 1 to 4, **characterised in that**, for non-cited prescriptions, inter- and extrapolated values are valid.

**Revendications**

1. Procédé permettant de fabriquer un verre de lunettes progressif, comprenant les étapes consistant à :

- prédéfinir des valeurs de service ;
- prédéfinir une origine de coordonnées au niveau du sommet côté objet du verre de lunettes ;
- fabriquer le verre de lunettes de telle sorte que le verre de lunettes comporte :

- une partie permettant de regarder à de plus grandes distances, et en particulier dans une zone située « à l'infini » (partie pour la vision de loin),
- une partie permettant de regarder à de plus petites distances, et en particulier dans la zone située à une « distance de lecture » (partie pour la vision de près), et
- une zone progressive située entre la partie pour la vision de loin et la partie pour la vision de près, dans laquelle l'action du verre de lunettes augmente en passant de la valeur au niveau du point de référence de loin situé dans la partie pour la vision de loin jusqu'à la valeur du point de référence de près situé dans la partie pour la vision de près le long d'une courbe allant vers le nez (ligne principale),

**caractérisé en ce que**, afin de réduire au minimum la variation des propriétés de reproduction lors des mouvements horizontaux du regard le long de la courbe, qui sont produits par les points d'intersection entre les faisceaux principaux et la surface avant, ces faisceaux principaux passant par le point objet de coordonnées (x-dx,y,s) au début du mouvement pour atteindre le point objet de coordonnées (x+dx,y,s) à la fin du mouvement, s = -40 mm et dx = 10 mm, en tant que valeur absolue de la différence de l'astigmatisme apparaissant au minimum et au maximum sur la courbe, est inférieure à AH :

| Sph = -4,0 dpt, Add = 1,0 dpt | | |
|---|---|---|
| y = 15 mm | | |
| X [mm] | -15,0 | 15,0 |
| AH [dpt] | 0,172 | 0,106 |
| y = -35 mm | | |
| X [mm] | -15,0 | 15,0 |
| AH [dpt] | 0,527 | 0,567 |

| Sph = -4,0 dpt, Add = 2,0 dpt | | |
|---|---|---|
| y = 15 mm | | |
| x [mm] | -15,0 | 15,0 |
| AH [dpt] | 0,401 | 0,341 |
| y = -35 mm | | |
| x [mm] | -15,0 | 15,0 |
| AH [dpt] | 0,998 | 1,202 |

| Sph = -4,0 dpt, Add = 3,0 dpt | | |
|---|---|---|
| y = 15 mm | | |
| x [mm] | -15,0 | 15,0 |
| AH [dpt] | 0,490 | 0,384 |
| y = -35 mm | | |
| x [mm] | -15,0 | 15,0 |
| AH [dpt] | 1,617 | 2,003 |

| Sph = 0,5 dpt, Add = 1,0 dpt | | |
|---|---|---|
| y = 15 mm | | |
| x [mm] | -15,0 | 15,0 |
| AH [dpt] | 0,197 | 0,130 |
| y = -35 mm | | |
| x [mm] | 15,0 | 15,0 |
| AH [dpt] | 0,667 | 0,727 |

| Sph = 0,5 dpt, Add = 2,0 dpt | | |
|---|---|---|
| y = 15 mm | | |
| x [mm] | -15,0 | 15,0 |
| AH [dpt] | 0,413 | 0,353 |
| y = -35 mm | | |
| x [mm] | -15,0 | 15,0 |
| AH [dpt] | 1,074 | 1,194 |

| Sph = 0,5 dpt, Add = 3,0 dpt | | |
|---|---|---|
| y = 15 mm | | |
| x [mm] | -15,0 | 15,0 |
| AH [dpt] | 0,523 | 0,390 |

**EP 1 277 078 B1**

(suite)

| y = -35 mm | | |
|---|---|---|
| x [mm] | -15,0 | 15,0 |
| AH [dpt] | 1,708 | 2,030 |

| Sph = 5,0 dpt, Add = 1,0 dpt | | |
|---|---|---|
| y = 15 mm | | |
| x [mm] | 15,0 | 15,0 |
| AH [dpt] | 0,205 | 0,135 |
| y = -35 mm | | |
| x [mm] | -15,0 | 15,0 |
| AH [dpt] | 0,719 | 0,732 |

| Sph = 5,0 dpt, Add = 2,0 dpt | | |
|---|---|---|
| y = 15 mm | | |
| x [mm] | -15,0 | 15,0 |
| AH [dpt] | 0,411 | 0,333 |
| y = -35 mm | | |
| x [mm] | -15,0 | 15,0 |
| AH [dpt] | 1,192 | 1,330 |

| Sph = 5,0 dpt, Add = 3,0 dpt | | |
|---|---|---|
| y = 15 mm | | |
| x [mm] | -15,0 | 15,0 |
| AH [dpt] | 0,627 | 0,383 |
| y = -35 mm | | |
| x [mm] | -15,0 | 15,0 |
| AH [dpt] | 1,772 | 2,271 |

**2.** Procédé selon la revendication 1, **caractérisé en ce que** la valeur absolue de la différence de la focale moyenne apparaissant au minimum et au maximum sur la courbe est inférieure à BH :

| Sph = -4,0 dpt, Add = 1,0 dpt | | |
|---|---|---|
| y = 15 mm | | |
| x [mm] | -15,0 | 15,0 |
| BH [dpt] | 0,116 | 0,068 |

**32**

(suite)

| y = -35 mm | | |
|---|---|---|
| x [mm] | -15,0 | 15,0 |
| BH [dpt] | 0,334 | 0,409 |

| Sph = -4,0 dpt, Add = 2,0 dpt | | |
|---|---|---|
| y = 15 mm | | |
| x [mm] | -15,0 | 15,0 |
| BH [dpt] | 0,259 | 0,209 |
| y = -35 mm | | |
| x [mm] | -15,0 | 15,0 |
| BH [dpt] | 0,687 | 0,890 |

| Sph = -4,0 dpt, Add = 3,0 dpt | | |
|---|---|---|
| y = 15 mm | | |
| x [mm] | -15,0 | 15,0 |
| BH [dpt] | 0,347 | 0,235 |
| y = -35 mm | | |
| x [mm] | -15,0 | 15,0 |
| BH [dpt] | 0,957 | 1,351 |

| Sph = 0,5 dpt, Add = 1,0 dpt | | |
|---|---|---|
| y = 15 mm | | |
| x [mm] | -15,0 | 15,0 |
| BH [dpt] | 0,155 | 0,093 |
| y = -35 mm | | |
| x [mm] | -15,0 | 15,0 |
| BH [dpt] | 0,384 | 0,504 |

| Sph = 0,5 dpt, Add = 2,0 dpt | | |
|---|---|---|
| y = 15 mm | | |
| x [mm] | -15,0 | 15,0 |
| BH [dpt] | 0,326 | 0,248 |
| y = -35 mm | | |
| x [mm] | -15,0 | 15,0 |
| BH [dpt] | 0,750 | 0,931 |

EP 1 277 078 B1

| Sph = 0,5 dpt, Add = 3,0 dpt | | |
|---|---|---|
| y = 15 mm | | |
| x [mm] | -15,0 | 15,0 |
| BH [dpt] | 0,427 | 0,279 |
| y = -35 mm | | |
| x [mm] | -15,0 | 15,0 |
| BH [dpt] | 1,081 | 1,362 |

| Sph = 5,0 dpt, Add = 1,0 dpt | | |
|---|---|---|
| y = 15 mm | | |
| x [mm] | -15,0 | 15,0 |
| BH [dpt] | 0,101 | 0,063 |
| y = -35 mm | | |
| x [mm] | -15,0 | 15,0 |
| BH [dpt] | 0,585 | 0,676 |

| Sph = 5,0 dpt, Add = 2,0 dpt | | |
|---|---|---|
| y = 15 mm | | |
| x [mm] | -15,0 | 15, 0 |
| BH [dpt] | 0,286 | 0,218 |
| y = -35 mm | | |
| x [mm] | -15,0 | 15,0 |
| BH [dpt] | 0,981 | 1,197 |

| Sph = 5,0 dpt, Add = 3,0 dpt | | |
|---|---|---|
| y = 15 mm | | |
| x [mm] | -15,0 | 15,0 |
| BH [dpt] | 0,447 | 0,257 |
| y = -35 mm | | |
| x [mm] | -15,0 | 15,0 |
| BH [dpt] | 1,164 | 1,674 |

3. Procédé selon la revendication 1 ou 2, **caractérisé en ce que** la valeur absolue du maximum de la première dérivée de l'astigmatisme le long de la courbe est inférieure à AG :

34

| Sph = -4, 0 dpt, Add = 1, 0 dpt | | |
|---|---|---|
| y = 15 mm | | |
| x [mm] | -15,0 | 15,0 |
| AG [dpt/mm] | 0,027 | 0,021 |
| y = -35 mm | | |
| x [mm] | -15,0 | 15,0 |
| AG [dpt/mm] | 0,091 | 0,088 |

| Sph = -4,0 dpt, Add = 2,0 dpt | | |
|---|---|---|
| y = 15 mm | | |
| x [mm] | -15,0 | 15,0 |
| AG [dpt/mm] | 0,065 | 0,054 |
| y = -35 mm | | |
| x [mm] | -15,0 | 15,0 |
| AG [dpt/mm] | 0,168 | 0,179 |

| Sph = -4,0 dpt, Add = 3,0 dpt | | |
|---|---|---|
| y = 15 mm | | |
| x [mm] | -15,0 | 15,0 |
| AG [dpt/mm] | 0,077 | 0,060 |
| y = -35 mm | | |
| x [mm] | -15,0 | 15,0 |
| AG [dpt/mm] | 0,276 | 0,284 |

| Sph = 0,5 dpt, Add = 1,0 dpt | | |
|---|---|---|
| y = 15 mm | | |
| x [mm] | -15,0 | 15,0 |
| AG [dpt/mm] | 0,027 | 0,021 |
| y = -35 mm | | |
| x [mm] | -15,0 | 15,0 |
| AG [dpt/mm] | 0,105 | 0,105 |

| Sph = 0,5 dpt, Add = 2,0 dpt | | |
|---|---|---|
| y = 15 mm | | |
| x [mm] | -15,0 | 15,0 |
| AG [dpt/mm] | 0,060 | 0,049 |
| y = -35 mm | | |

(suite)

| Sph = 0,5 dpt, Add = 2,0 dpt | | |
|---|---|---|
| y = 15 mm | | |
| x [mm] | -15,0 | 15,0 |
| AG [dpt/mm] | 0,168 | 0,151 |

| Sph = 0,5 dpt, Add = 3,0 dpt | | |
|---|---|---|
| y = 15 mm | | |
| x [mm] | -15,0 | 15,0 |
| AG [dpt/mm] | 0,079 | 0,053 |
| y = -35 mm | | |
| x [mm] | -15,0 | 15,0 |
| AG [dpt/mm] | 0,285 | 0,256 |

| Sph = 5,0 dpt, Add = 1,0 dpt | | |
|---|---|---|
| y = 15 mm | | |
| x [mm] | -15,0 | 15,0 |
| AG [dpt/mm] | 0,027 | 0,017 |
| y = -35 mm | | |
| x [mm] | -15,0 | 15,0 |
| AG [dpt/mm] | 0,093 | 0,094 |

| Sph = 5,0 dpt, Add = 2,0 dpt | | |
|---|---|---|
| y = 15 mm | | |
| x [mm] | -15,0 | 15,0 |
| AG [dpt/mm] | 0,052 | 0,040 |
| y = -35 mm | | |
| x [mm] | -15,0 | 15,0 |
| AG [dpt/mm] | 0,183 | 0,155 |

| Sph = 5,0 dpt, Add = 3,0 dpt | | |
|---|---|---|
| y = 15 mm | | |
| x [mm] | -15,0 | 15,0 |
| AG [dpt/mm] | 0,075 | 0,043 |
| y = -35 mm | | |
| x [mm] | -15,0 | 15,0 |

(suite)

| y = -35 mm | | |
|---|---|---|
| AG [dpt/mm] | 0,284 | 0,252 |

4. Procédé selon l'une quelconque des revendications 1 à 3, **caractérisé en ce que** la valeur absolue du maximum de la première dérivée de la focale moyenne le long de la courbe est inférieure à BG :

| Sph = -4,0 dpt, Add = 1,0 dpt | | |
|---|---|---|
| y = 15 mm | | |
| x [mm] | -15,0 | 15,0 |
| BG [dpt/mm] | 0,021 | 0,014 |
| y = -35 mm | | |
| x [mm] | -15,0 | 15,0 |
| BG [dpt/mm] | 0,066 | 0,065 |

| Sph = -4,0 dpt, Add = 2,0 dpt | | |
|---|---|---|
| y = 15 mm | | |
| x [mm] | -15,0 | 15,0 |
| BG [dpt/mm] | 0,037 | 0,029 |
| y = -35 mm | | |
| x [mm] | -15,0 | 15,0 |
| BG [dpt/mm] | 0,129 | 0,153 |

| Sph = -4,0 dpt, Add = 3,0 dpt | | |
|---|---|---|
| y = 15 mm | | |
| x [mm] | -15,0 | 15,0 |
| BG [dpt/mm] | 0,051 | 0,032 |
| y = -35 mm | | |
| x [mm] | -15,0 | 15,0 |
| BG [dpt/mm] | 0,187 | 0,223 |

| Sph = 0,5 dpt, Add = 1,0 dpt | | |
|---|---|---|
| y = 15 mm | | |
| x [mm] | -15,0 | 15,0 |
| BG [dpt/mm] | 0,021 | 0,016 |
| y = -35 mm | | |
| x [mm] | -15,0 | 15,0 |
| BG [dpt/mm] | 0,072 | 0,073 |

| Sph = 0,5 dpt, Add = 2,0 dpt | | |
|---|---|---|
| y = 15 mm | | |
| x [mm] | -15,0 | 15,0 |
| BG [dpt/mm] | 0,042 | 0,034 |
| y = -35 mm | | |
| x [mm] | -15,0 | 15,0 |
| BG [dpt/mm] | 0,137 | 0,131 |

| Sph = 0,5 dpt, Add = 3,0 dpt | | |
|---|---|---|
| y = 15 mm | | |
| x [mm] | -15,0 | 15,0 |
| BG [dpt/mm] | 0,058 | 0,036 |
| y = -35 mm | | |
| x [mm] | -15,0 | 15,0 |
| BG [dpt/mm] | 0,208 | 0,177 |

| Sph = 5,0 dpt, Add = 1,0 dpt | | |
|---|---|---|
| y = 15 mm | | |
| x [mm] | -15,0 | 15,0 |
| BG [dpt/mm] | 0,012 | 0,008 |
| y = -35 mm | | |
| x [mm] | -15,0 | 15,0 |
| BG [dpt/mm] | 0,085 | 0,084 |

| Sph = 5,0 dpt, Add = 2,0 dpt | | |
|---|---|---|
| y = 15 mm | | |
| x [mm] | -15,0 | 15,0 |
| BG [dpt/mm] | 0,034 | 0,025 |
| y = -35 mm | | |
| x [mm] | -15,0 | 15,0 |
| BG [dpt/mm] | 0,176 | 0,154 |

| Sph = 5,0 dpt, Add = 3,0 dpt | | |
|---|---|---|
| y = 15 mm | | |
| x [mm] | -15,0 | 15,0 |
| BG [dpt/mm] | 0,052 | 0,027 |

38

(suite)

| y = -35 mm | | |
|---|---|---|
| x [mm] | -15,0 | 15,0 |
| BG [dpt/mm] | 0,228 | 0,194 |

5. Procédé selon l'une quelconque des revendications 1 à 4, **caractérisé en ce que**, pour les décisions non effectuées, on utilise des valeurs interpolées ou extrapolées.

**Fig. 1**

**Fig. 2**